# EUROPÄISCHE PATENTSCHRIFT

(11) **EP 4 311 635 B1**
(45) Veröffentlichungstag und Bekanntmachung des Hinweises auf die Patenterteilung: **22.04.2026**
(21) Anmeldenummer: 23188411.5
(22) Anmeldetag: 28.07.2023
(51) Int. Cl.: B25J 15/02, H01R 43/28, B25J 15/00

(54) **GREIFER ZUR POSITIONIERUNG VON KABELN ZUR HERSTELLUNG VON ELEKTRISCHEN KABELBÄUMEN**
GRIPPER FOR POSITIONING CABLES FOR PRODUCING ELECTRICAL HARNESSES
PINCE DE POSITIONNEMENT DE CÂBLES POUR LA FABRICATION DE FAISCEAUX DE CÂBLES ÉLECTRIQUES

(30) Priorität: 29.07.2022 DE 102022119134
(43) Veröffentlichungstag der Anmeldung: 31.01.2024
(73) Patentinhaber: Yazaki Systems Technologies GmbH, 93059 Regensburg (DE)
(72) Erfinder: BURA, Johann, 93055 Regensburg (DE); BRUNNER, Christian, 93080 Pentling (DE)
(74) Vertreter: Patentanwaltskanzlei WILHELM & BECK

(56) Entgegenhaltungen:
- DE-A1- 102019 204 289
- JP-A- 2011 212 813
- US-B2- 10 014 644
- US-B2- 9 314 927

## Beschreibung

Die Erfindung betrifft einen Greifer für einen automatisierten und/oder manuellen Manipulator für die Herstellung von elektrischen Kraftfahrzeug-Kabelbäumen. Ferner betrifft die Erfindung ein Greifermodul, einen Manipulator sowie einen Industrieroboter.

Trotz voranschreitender Automatisierung bei der Herstellung von elektrischen Kabelbäumen für z. B. Kraftfahrzeuge, werden Kabelbäume oft manuell gefertigt, was durch die vielen verschiedenen Positionieraufgaben für die biegeschlaffen elektrischen Leitungen der einzelnen Kabel der Kabelbäume bedingt ist. Eine Komplexität der darüber hinaus diffizilen Positionieraufgaben der Kabel mit ihren ggf. an deren Leitungen vorgesehenen elektrischen Terminals für die Kabelbäume, macht eine vollständige Automatisierung der Herstellung von Kabelbäumen für einen rationellen Serieneinsatz unmöglich. D. h. die Positionieraufgaben bei der Herstellung von Kabelbäumen sind durch Roboter nur teilweise automatisierbar.

Aus DE 10 2019 204 289 A1, JP 2011 212813 A, US 10,014,644 B2 und US 9,314,927 B2 sind verschiedene Greifer bekannt.

Es ist daher eine Aufgabe der Erfindung, einen Automatisierungsgrad bei der Herstellung von elektrischen Kraftfahrzeug-Kabelbäumen zu verbessern. Dies soll kostengünstig mittels einer einfachen Einrichtung (Endeffektor) z. B. für einen Industrieroboter erfolgen können. - Die Aufgabe der Erfindung ist mittels eines Greifers für einen automatisierten und/oder manuellen Manipulator (Roboterarm) für die Herstellung von elektrischen Kabelbäumen; und mittels eines Greifermoduls, eines Manipulators oder eines Industrieroboters, gemäß den unabhängigen Ansprüchen gelöst. - Vorteilhafte Weiterbildungen, zusätzliche Merkmale und/oder Vorteile der Erfindung ergeben sich aus den abhängigen Ansprüchen und der folgenden Beschreibung.

Der erfindungsgemäße Greifer umfasst die Merkmale des anhängigen Anspruchs 1.

Ein Kabel für einen Kabelbaum bzw. ein Kabel eines Kabelbaums kann eine Mehrzahl elektrischer Leitungen oder eine einzige Leitung umfassen. Die Leitung kann dabei als eine Einzelleitung oder eine Mantelleitung mit mehreren Einzelleitungen ausgebildet sein. Die Leitung kann dabei lediglich als Leitung oder als eine (vor-)konfektionierte Leitung ausgebildet sein. Eine solche Leitung weist einen eigentlichen elektrischen Litzenleiter und/oder Drahtleiter innerhalb einer elektrischen Isolierung auf. Eine solche (vor-)konfekti-onierte Leitung weist eine Leitung mit wenigstens einem eigentlichen elektrischen Terminal und ggf. wenigstens einem Verbindergehäuse des wenigstens einen Terminals auf.

Mittels wenigstens eines Kabel-Stempels der Greiffinger ist in einer Offenstellung, einer Zwischenstellung oder einer Schließstellung das Kabel platzierbar, wobei bevorzugt mittels der Kabel-Stempel der Greiffinger eine Kabel-Stempeleinrichtung des Greifers ausbildbar und/oder in einer Schließstellung ausbildet ist.

Mittels des multifunktionalen Greifers können z. B. folgende Handhabungsfunktionen durchgeführt werden. Im Bereich des Sicherns: Greifen (Halten) und Entspannen (Lösen); und im Bereich des Positionierens (inkl. Sichern): Bewegen, Orientieren, Ordnen, Verschieben, Schwenken, Drehen, Weitergeben und/ oder Wirken. Insbesondere dient der Greifer zum Greifen, Verlegen, Führen (wenigstens oder ausschließlich loses Halten), Fixieren (festes Halten), Platzieren (loses oder festes Halten), Manipulieren (festes Halten) etc. und wieder Lösen von Kabeln für die Kabelbaummontage. - Hierbei kann das Kabel mittels des Greifers an seiner Leitung, seinem Terminal und/oder seinem Verbindergehäuse gegriffen werden.

Die Greiffinger können z. B. parallel aufeinander zubewegbar und wieder voneinander wegbewegbar (Greiffinger als Linearbacken), aufeinander zuschwenkbar und wieder voneinander wegschwenkbar (Greiffinger als Schwenkarme) oder scherenartig aufeinander zubewegbar und wieder voneinander wegbewegbar (Greiffinger als Scherenhebel) ausgebildet sein (vgl. auch unten). Die Greiffinger können dabei z. B. mechanisch, fluidisch (pneumatisch) oder magnetisch bewegbar ausgebildet sein.

Beim Durchführen der Positionieraufgabe kann sich das Kabel zwischen den Greiffingern in der Kabel-Durchführungseinrichtung zum wenigstens losen Halten des Kabels in einer Schließstellung befinden. Alternativ kann sich das Kabel zwischen den Greiffingern in der Kabel-Fixiereinrichtung zum festen Halten des Kabels in einer Schließstellung befinden. Alternativ kann sich das Kabel an/in der Kabel-Stempeleinrichtung der Greiffinger in einer Schließstellung, oder an/in einem Kabel-Stempel eines einzelnen Greiffingers in einer Offenstellung oder einer Zwischenstellung befinden.

Die Greiffinger können mit ihren Längserstreckungen in eine Hochrichtung des Greifers verlaufen, wobei die Greiffinger in Querrichtung des Greifers gegeneinander bewegbar im Greifer eingerichtet sind. Ein Greiffinger kann sich in bevorzugt einen Montageabschnitt, bevorzugt einen Führungsabschnitt, eine Kabel-Führungsausnehmung, bevorzugt einen Backenabschnitt und einen Stempelabschnitt gliedern. Die Hochrichtung ist dabei insbesondere durch eine Längserstreckung der Greiffinger und die Querrichtung ist dabei insbesondere durch eine Bewegungsrichtung der Greiffinger definiert.

Hierbei ist es bevorzugt, dass, je nach einem Vorhandensein eines Abschnitts und von einem freien Ende des Greiffingers kommend, der Stempelabschnitt, der Backenabschnitt, der Führungsabschnitt und der Montageabschnitt direkt aufeinanderfolgend im Greiffinger eingerichtet sind. Hierbei kann die Kabel-Führungsausnehmung insbesondere in den Führungsabschnitt hinein eingerichtet sein, wobei sich die Kabel-Führungsausnehmung ferner in den Backenabschnitt hineinerstrecken kann.

Der ggf. vorhandene Montageabschnitt des Greiffingers dient einer Befestigung des Greiffingers an/auf einem Führungselement einer Kabel-Führungseinrichtung für das Kabel (vgl. unten) und/oder an/auf einem Greiferantrieb (vgl. unten). Der Greiferantrieb und der Greifer bilden dabei ein Greifermodul. - Der ggf. vorhandene Führungsabschnitt des Greiffingers dient einer bevorzugt linearen Führung des Greiffingers insbesondere derart, dass sich beim Gegeneinanderbewegen der Greiffinger diese gegenseitig mit ihren Führungsabschnitten führen, wobei die Greiffinger z. B. partiell aneinander vorbeigleiten können (vgl. unten).

Die Kabel-Führungsausnehmung dient einer Ausbildung der Kabel-Durchführungseinrichtung in einer Schließstellung insbesondere derart, dass die Kabel-Führungsausnehmungen der Greiffinger die Kabel-Durchführungseinrichtung zwischen sich ausbilden. Es ist aber auch möglich, die Kabel-Führungsausnehmung im Wesentlichen in nur einem einzigen Greiffinger einzurichten, wobei dessen Abmessung für einen betreffenden Durchmesser des Kabels entsprechend gewählt sein muss. Der andere Greiffinger dient dann mit einem Rand einem Verschließen der Kabel-Führungsausnehmung des ersten Greiffingers.

Der ggf. vorhandene Backenabschnitt dient einer Ausbildung der Kabel-Fixiereinrichtung in einer Schließstellung insbesondere derart, dass die Backenabschnitte der Greiffinger die Kabel-Fixiereinrichtung zwischen sich ausbilden. Es ist aber auch möglich, die Kabel-Fixiereinrichtung im Wesentlichen in nur einem einzigen Greiffinger einzurichten, der andere Greiffinger dient dann mit einem Rand als ein Gegenlager der eigentlichen Kabel-Fixiereinrichtung des ersten Greiffingers.

Der Stempelabschnitt dient einem Platzieren des Kabels durch den Greifer, wobei entweder nur ein Greiffinger solch einen Stempelabschnitt aufweisen kann oder beide. Weisen beide Greiffinger Stempelabschnitte auf, so können diese wiederum entweder in Alleinstellung oder zusammen einem Platzieren des Kabels durch den Greifer dienen. Ersteres kann in einer Offenstellung mit nur einem Greiffinger erfolgen. Zweiteres kann in einer Schließstellung mit beiden Greiffingern erfolgen, wobei aber nur ein Greiffinger effektiv zu sein braucht.

Beim Bewegen des Greifers in eine Schließstellung können die Greiffinger mit ihren Greiferinnenseiten gegeneinander ansitzbar oder die Greiffinger können in Querrichtung partiell aneinander vorbeigleitbar im Greifer eingerichtet sein. Im ersten Fall stoßen die Greiferinnenseiten der Greiffinger direkt aneinander an, und im zweiten Fall können die Greiferinnenseiten der Greiffinger bis zu einem gewissen Grad aneinander vorbeigleiten. In beiden Fällen bildet sich zwischen den Greiffingern die Kabel-Durchführungseinrichtung aus, welche in einer Schließstellung eine bestimmte Abmessung in Querrichtung und eine bestimmte Abmessung in Hochrichtung aufweist. Die Greiferinnenseiten sind dabei natürlich die inneren, einander gegenüberliegenden Querseiten der Greiffinger.

Beim Bewegen des Greifers in eine Schließstellung sowie beim partiellen aneinander Vorbeigleiten der Greiffinger können Fingerführungsflächen der Führungsabschnitte aneinander wenigstens teilweise aneinander anliegen und sich gegenseitig abstützend im Greifer eingerichtet sein. Die Führungsabschnitte können ferner einen Übergang in einen Montagesockel des Montageabschnitts bilden, wobei die Führungsabschnitte, einmal von ihren Fingerführungsflächen abgesehen, sich verbreitend in den Montagesockel übergehen können.

Beim Bewegen des Greifers in eine Schließstellung sowie beim partiellen aneinander Vorbeigleiten der Greiffinger können sich die Fingerführungsflächen gegenseitig in Längsrichtung des Greifers abstützen und im Wesentlichen parallel zueinander im Greifer eingerichtet sein. Die Fingerführungsflächen können dabei insbesondere eben ausgebildet sein. Die Längsrichtung ist dabei insbesondere durch eine idealisierte geradlinige Längserstreckung des vom Greifer gehaltenen Kabels definiert.

Die Kabel-Durchführungseinrichtung kann von in Querrichtung des Greifers einander gegenüberliegenden Abschnitten der Greiffinger in einer Schließstellung ausgebildet sein. Hierbei können diese Abschnitte einander in Querrichtung direkt oder in Querrichtung diagonal (zusätzlicher Versatz in Längsrichtung) gegenüberliegenden. Die Kabel-Durchführungseinrichtung kann von wenigstens einer Kabel-Führungsausnehmung eines Greiffingers, insbesondere von jeweils einer Kabel-Führungsausnehmung der Greiffinger, in einer Schließstellung ausgebildet sein. Hierbei ist die Kabel-Führungsausnehmung bevorzugt wenigstens im Führungsabschnitt des betreffenden Greiffingers eingerichtet. Ferner kann sich die Kabel-Führungsausnehmung auch in den Backenabschnitt des betreffenden Greiffingers hineinerstrecken.

Die Kabel-Führungsausnehmung kann ausgehend von der Greiferinnenseite in Querrichtung in den betreffenden Greiffinger hineingehend eingerichtet sein. Die Kabel-Führungsausnehmung kann einen u-förmigen oder v-förmigen Querschnitt mit bevorzugt einem langen (Richtung Führungsabschnitt) und einem kurzen Schenkel (Richtung Backenabschnitt) aufweisen. Hierbei können die Schenkel insbesondere ebene oder geschwungene lediglich in Längsrichtung fluchtende Flächen im betreffenden Greiffinger ausbilden. Gegenüber der Hochrichtung und Querrichtung sind die Schenkel bevorzugt in einem Winkel angeordnet, d. h. sie fluchten mit keiner dieser beiden Richtungen.

Bevorzugt weist die Kabel-Führungsausnehmung in Längsrichtung gegenüberliegend zur Fingerführungsfläche des Greiffingers eine Fase auf. Ferner kann eine Fase zwischen der Kabel-Führungsausnehmung und der Fingerführungsfläche eingerichtet sein. Die Fase dient einem verbesserten Aufnehmen des Kabels in einer sich einrichtenden Kabel-Durchführungseinrichtung des Greifers, z. B. derart, dass beim Initiieren des losen Haltens und beim losen Halten des Kabels mit dem Greifer eine elektrische Isolierung des Kabels nicht verletzt werden kann.

Die Kabel-Fixiereinrichtung kann wenigstens von einander gegenüberliegenden Abschnitten der Greiffinger in einer Schließstellung ausgebildet sein. Die Kabel-Fixiereinrichtung kann von einander wenigstens teilweise direkt gegenüberliegenden Kabel-Backen der Backenabschnitte in einer Schließstellung ausgebildet sein. Eine Kabel-Backe kann einen in Längsrichtung vom Backenabschnitt des betreffenden Greiffingers nach innen in den Greifer wegkragenden (wegstehenden) Backenfortsatz umfassen.

Hierbei sind die Backenfortsätze bevorzugt derart im Greifer eingerichtet, dass in der Schließstellung der Backenfortsatz des einen Greiffingers in eine erste Längsrichtung von seinem Backenabschnitt wegsteht, und der Backenfortsatz des zweiten Greiffingers in eine der ersten Längsrichtung entgegengesetzte zweite Längsrichtung von seinem Backenabschnitt wegsteht. In einer Schließstellung liegen sich wenigstens die Backenfortsätze der Backenabschnitte der Greiffinger in Querrichtung einander direkt gegenüber. In einer Schließstellung befindet sich natürlich das Kabel in der Kabel-Fixiereinrichtung bzw. zwischen den Kabel-Backen bzw. wenigstens zwischen den Backenfortsätzen.

Die Backenflächen der Kabel-Fixiereinrichtung können an ihren einander gegenüberliegenden Flächen konvex ausgebildet sein und/oder eine Antirutschbeschichtung aufweisen. Konvexe Flächen erleichtern eine Aufnahme des Kabels zwischen den Backenflächen und eine Antirutschbeschichtung, z. B. eine Gummierung (selbstverständlich nicht im Sinne einer Klebefläche), erleichtern ein festes Halten des Kabels.

Bevorzugt weist in Längsrichtung außen am Greifer eine Kabel-Backe eine Fase in Hochrichtung auf. Ferner kann an einem diesbezüglich in Längsrichtung gegenüberliegenden Längsende der Kabel-Backe, also am Backenfortsatz eine Fase eingerichtet sein. Die Fase dient einem verbesserten festen Halten des Kabels in einer sich einrichtenden Kabel-Fixiereinrichtung, z. B. derart, dass beim Initiieren des festen Haltens und beim festen Halten des Kabels mit dem Greifer wiederum eine elektrische Isolierung des Kabels nicht verletzt werden kann.

Die Kabel-Stempeleinrichtung kann von einander in Längsrichtung versetzen Kabel-Stempeln der Stempelabschnitte in einer Schließstellung ausgebildet sein. Die einander in Längsrichtung zugewandten Seiten der Kabel-Stempel können analog zu den Führungsabschnitten Fingerführungsflächen aufweisen. D. h. beim Bewegen des Greifers in eine Schließstellung sowie beim partiellen aneinander Vorbeigleiten der Greiffinger liegen die Fingerführungsflächen der Stempelabschnitte bzw. der Kabel-Stempel wenigstens teilweise aneinander an und sind sich gegenseitig in Längsrichtung abstützend im Greifer eingerichtet.

In einer Schließstellung können die Kabel-Stempel als Kabel-Stempeleinrichtung in Längsrichtung im Wesentlichen fluchtend zur Deckung kommen. Eine Stempel-Aufnahmeausnehmung ist erfindungsgemäß ausgehend von einem freien Ende des betreffenden Greiffingers in Hochrichtung in den betreffenden Kabel-Stempel hineingehend eingerichtet. Die Stempel-Aufnahmeausnehmung des betreffenden Kabel-Stempels oder die Stempel-Aufnahmeausnehmungen der Kabel-Stempel können einen u-förmigen oder v-förmigen Querschnitt mit bevorzugt gleichlangen Schenkeln aufweisen. Hierbei können die Schenkel insbesondere ebene oder geschwungene lediglich in Längsrichtung fluchtende Flächen im betreffenden Greiffinger bzw. Greifer ausbilden. Gegenüber der Hochrichtung und Querrichtung sind die Schenkel bevorzugt in einem Winkel angeordnet, d. h. sie fluchten mit keiner dieser beiden Richtungen.

Bevorzugt weist in Längsrichtung außen am Greifer eine Stempel-Aufnahmeausnehmung eine Fase auf. Ferner kann an einem diesbezüglich in Längsrichtung gegenüberliegenden Längsende der Stempel-Aufnahmeausnehmung eine Fase eingerichtet sein. Die Fase dient einem verbesserten Aufnehmen des Kabels in der Kabel-Stempeleinrichtung des Greifers bzw. einer Stempel-Aufnahmeausnehmung eines Greiffingers, z. B. derart, dass beim Initiieren der Vorschubbewegung und beim Vorbewegen des Kabels mit dem Greifer ferner wiederum eine elektrische Isolierung des Kabels nicht verletzt werden kann.

Der Greifer kann zwei, insbesondere lediglich zwei, im Wesentlichen identische Greiffinger umfassen. Umfasst der Greifer lediglich zwei Greiffinger, so soll das heißen, dass kein dritter Greiffinger vorhanden ist; eine andere Vorrichtung oder Einrichtung, wie z. B. eine Kabel-Führungseinrichtung (vgl. unten), kann natürlich am Greifer vorgesehen bzw. im Greifer eingerichtet sein. Identische Greiffinger können um die Hochrichtung um 180° gedreht im Greifer eingerichtet sein. D. h. der eine Greiffinger kann durch eine 180°-Drehung in den anderen Greiffinger übergeführt werden bzw. vice versa. Ferner kann wenigstens ein Greiffinger selbst nicht rotationssymmetrisch oder spiegelsymmetrisch ausgebildet sein.

Der Greifer kann eine Kabel-Führungseinrichtung für das Kabel derart aufweisen, dass durch den Greifer mittels der Kabel-Führungseinrichtung das Kabel im Greifer fangbar ist. Ferner kann beim Verlegen des Kabels mittels der Kabel-Führungseinrichtung das Kabel führbar sein. Die Kabel-Führungseinrichtung dient z. B. dazu, dass das Kabel seinen eigenen Legeweg nicht blockiert. Des Weiteren kann durch die Kabel-Führungseinrichtung und durch die Kabel-Durchführungseinrichtung das Kabel verlegbar sein.

Die Kabel-Führungseinrichtung kann zwei aufeinander zu bewegbare und wieder voneinander wegbewegbare Führungselemente aufweisen. In einer Schließstellung kann zwischen den Führungselementen ein Kabeldurchgang des Greifers zum Fangen und Führen des Kabels ausbildbar sein. Beim Verlegen eines Kabels wird das Kabel z. B. zwischen den beiden Führungselementen gefangen, aufgenommen und anschließend geführt.

An/auf einem betreffenden Führungselement kann jeweils ein Greiffinger montierbar sein. Ferner kann das eine Führungselement im Wesentlichen I-förmig und das andere Führungselement im Wesentlichen i-förmig ausgebildet sein. In einer Schließstellung übergreift ein Schenkel des I-förmigen Führungselements das i-förmige Führungselement und schließt so die Kabel-Führungseinrichtung an einem Längsende. Hierbei ist der Kabeldurchgang als ein langgestreckter Kabeldurchgang zwischen den Führungselementen eingerichtet.

Der Greifer kann einen Kabelniederhalter für das gefangene Kabel und/oder ein bereits verlegtes Kabel aufweisen. Der Kabelniederhalter, auch als Kabelabstreifer bezeichenbar, verhindert ein Herausspringen von Kabeln bzw. deren Leitungen aus Kavitäten, welche zuvor mit dem Greifer gelegt wurden. Ferner kann der Kabelniederhalter beim Fangen des Kabels ein Terminal des Kabels niederhalten und/oder herunterdrücken und des Weiteren kann der Kabelniederhalter beim Verlegen des Kabels dieses und/oder wenigstens ein bereits verlegtes Kabel niederhalten und/oder herunterdrücken.

Der Kabelniederhalter kann als ein flexibler Kabelniederhalter ausgebildet sein. Hierbei kann der Kabelniederhalter z. B. aus einem Gummi oder einem Kunststoff gefertigt sein. Der Kabelniederhalter kann derart ausgebildet sein, dass er abseits des eigentlichen Greifers an einem Greiferantrieb montierbar ist. - Der Greifer kann als ein Parallelgreifer, ein Schwenkgreifer oder ein Scherengreifer ausgebildet sein. Ein Greiffinger kann durch ein Spritzgussverfahren insbesondere aus einem Kunststoff hergestellt sein.

Der eigentliche Greiffinger kann stofflich einstückig oder integral ausgebildet sein; was analog auch auf ein Führungselement und/oder den Kabelniederhalter anwendbar ist. - Unter einer stofflich (adhäsiv) einstückigen Ausbildung ist eine Ausbildung des eigentlichen Greiffingers verstanden, bei welcher seine Einzelteile stoffschlüssig aneinander festgelegt (Schweißen, Löten, Kleben, Laminieren etc.) sind und der eigentliche Greiffinger bevorzugt nicht ohne eine Beschädigung eines seiner Einzelteile, in Einzelteile separierbar ist. Der Zusammenhalt des eigentlichen Greiffingers kann dabei ferner mittels eines Kraft- und/oder Formschlusses erzeugt sein (nicht bei integraler Ausbildung).

Unter einer integralen Ausbildung ist eine Ausbildung des eigentlichen Greiffingers verstanden, bei welcher es nur ein einziges, nur unter dessen Zerstörung teilbares Bauteil gibt. Das Bauteil ist aus einem einzigen Ursprungsstück (Blech, Rohling etc.) und/oder einer einzigen Ursprungsmasse (Metall-oder Kunststoffschmelze) gefertigt, das seinerseits bzw. die ihrerseits gezwungenermaßen integral ist. Ein innerer Zusammenhalt erfolgt mittels Adhäsion und/oder Kohäsion. Hierbei kann zusätzlich eine stofflich (adhäsiv) einstückige Laminierung, Beschichtung (z. B. die Antirutschbeschichtung der Kabel-Backe) etc. oder eine integrale Abscheidung, Galvanisierung etc. vorliegen.

Das erfindungsgemäße Greifermodul, der erfindungsgemäße Manipulator z. B. für einen Industrieroboter oder der erfindungsgemäße Industrieroboter weist einen erfindungsgemäßen Greifer und einen Greiferantrieb auf. Hierbei kann das Greifermodul als Endeffektor des Manipulators (Roboterarm) und/oder der Manipulator als eine Komponente des Industrieroboters ausgebildet sein. Der Greiferantrieb kann wenigstens zwei gegeneinander bewegbare Vorrichtungen aufweisen, auf welchen der Greifer montiert ist. Solch eine bewegbare Vorrichtung kann z. B. als ein Schlitten ausgebildet sein.

Die zwei gegeneinander bewegbaren Vorrichtungen können in Querrichtung linear oder schwenkend aufeinander zubewegbar und wieder voneinander wegbewegbar im Greiferantrieb eingerichtet sein. Ferner können die Greiffinger ggf. in Längsrichtung gegeneinander linear oder schwenkend bewegbar im Greifermodul eingerichtet sein. Hierbei kann auch nur ein einziger Greiffinger in Längsrichtung bewegbar eingerichtet sein, wohingegen der andere Greiffinger in Längsrichtung unbeweglich im Greifermodul eingerichtet ist. Jeweils ein einzelner Greiffinger kann ggf. über ein betreffendes Führungselement an/auf einer jeweiligen, bewegbaren Vorrichtung des Greiferantriebs montiert sein.

Die Erfindung ist im Folgenden anhand von Ausführungsbeispielen unter Bezugnahme auf die beigefügte schematische und nicht maßstabsgetreue Zeichnung näher erläutert. Abschnitte, Elemente, Bauteile, Einheiten, Komponenten und/oder Schemata, welche eine identische, univoke oder analoge Ausbildung und/ oder Funktion besitzen, sind in der Figurenbeschreibung (s. u.), der Bezugszeichenliste, den Patentansprüchen und in den Figuren (Fig.) der Zeichnung mit denselben Bezugszeichen gekennzeichnet. Eine mögliche, in der Erfindungsbeschreibung (s. o.) nicht erläuterte, in der Zeichnung nicht dargestellte und/oder nicht abschließende Alternative, eine statische und/ oder kinematische Umkehrung, eine Kombination etc. zu den Ausführungsbeispielen der Erfindung bzw. einer Komponente, einem Schema, einer Einheit, einem Bauteil, einem Element oder einem Abschnitt davon, kann ferner der Bezugszeichenliste und/oder der Figurenbeschreibung entnommen werden.

Bei der Erfindung kann ein Merkmal (Abschnitt, Element, Bauteil, Einheit, Komponente, Funktion, Größe etc.) positiv, d. h. vorhanden, oder negativ, d. h. abwesend, ausgestaltet sein. In dieser Spezifikation (Beschreibung (Erfindungsbeschreibung (s. o.), Figurenbeschreibung (s. u.)), Bezugszeichenliste, Patentansprüche, Zeichnung) ist ein negatives Merkmal als Merkmal nicht explizit erläutert, wenn nicht gemäß der Erfindung Wert daraufgelegt ist, dass es abwesend ist. D. h. die tatsächlich gemachte und nicht eine durch den Stand der Technik konstruierte Erfindung darin besteht, dieses Merkmal wegzulassen.

Ein Merkmal dieser Spezifikation kann nicht nur in einer angegebenen Art und/oder Weise, sondern auch in einer anderen Art und/oder Weise angewendet sein (Isolierung, Zusammenfassung, Ersetzung, Hinzufügung, Alleinstellung, Weglassung etc.). Insbesondere ist es möglich, anhand eines Bezugszeichens und einem diesem zugeordneten Merkmal bzw. vice versa, in der Beschreibung, der Bezugszeichenliste, den Patentansprüchen und/oder der Zeichnung, ein Merkmal in den Patentansprüchen und/oder der Beschreibung zu ersetzen, hinzuzufügen oder wegzulassen. Darüber hinaus kann dadurch ein Merkmal in einem Patentanspruch ausgelegt und/oder näher spezifiziert werden.

Die Merkmale der Beschreibung sind (angesichts des (zunächst meist unbekannten) Stands der Technik) auch als optionale Merkmale interpretierbar; d. h. ein jedes Merkmal kann als ein fakultatives, arbiträres oder bevorzugtes, also als ein nicht verbindliches, Merkmal aufgefasst werden. So ist eine Herauslösung eines Merkmals, ggf. inkl. seiner Peripherie, aus einem Ausführungsbeispiel möglich, wobei dieses Merkmal dann auf einen verallgemeinerten Erfindungsgedanken übertragbar ist. Das Fehlen eines Merkmals (negatives Merkmal) in einem Ausführungsbeispiel zeigt, dass das Merkmal in Bezug auf die Erfindung optional ist. Ferner ist bei einem Artbegriff für ein Merkmal auch ein Gattungsbegriff für das Merkmal mitlesbar (ggf. weitere hierarchische Gliederung in Untergattung etc.), wodurch, z. B. unter Beachtung von Gleichwirkung und/ oder Gleichwertigkeit, eine Verallgemeinerung des Merkmals möglich ist.

In den lediglich beispielhaften Figuren (Fig.) zeigen:
die Fig. 1 in einer vorderen/hinteren Perspektivansicht einen auf einem Greiferantrieb montierten erfindungsgemäßen Greifer in einer Offenstellung,
die Fig. 2 in einer hinteren/vorderen Perspektivansicht den auf dem Greiferantrieb montierten erfindungsgemäßen Greifer in einer Schließstellung, und
die Fig. 3 und 4 in jeweils einer Perspektivansicht von vorne/hinten (Fig. 3) bzw. hinten/vorne (Fig. 4) jeweils einen erfindungsgemäßen Greiffinger für den Greifer.

Die Erfindung ist im Folgenden anhand von Ausführungsformen einer Variante eines Greifers 10 und anhand von Ausführungsformen einer Variante eines erfindungsgemäßen Greifermoduls 1 für einen automatisierten und/oder manuellen Manipulator 0 für die Herstellung von elektrischen Kraftfahrzeug-Kabelbäumen näher erläutert. Obwohl die Erfindung detaillierter durch bevorzugte Ausführungsformen näher beschrieben und illustriert ist, so ist die Erfindung nicht durch die offenbarten Ausführungsformen eingeschränkt, sondern ist von grundlegenderer Natur. Andere Variationen können hieraus und/oder aus Obigem (Erfindungsbeschreibung) abgeleitet werden, ohne den Schutzumfang der Erfindung zu verlassen. In der Zeichnung sind nur diejenigen Abschnitte eines Gegenstands der Erfindung dargestellt, welche für ein Verständnis der Erfindung notwendig sind.

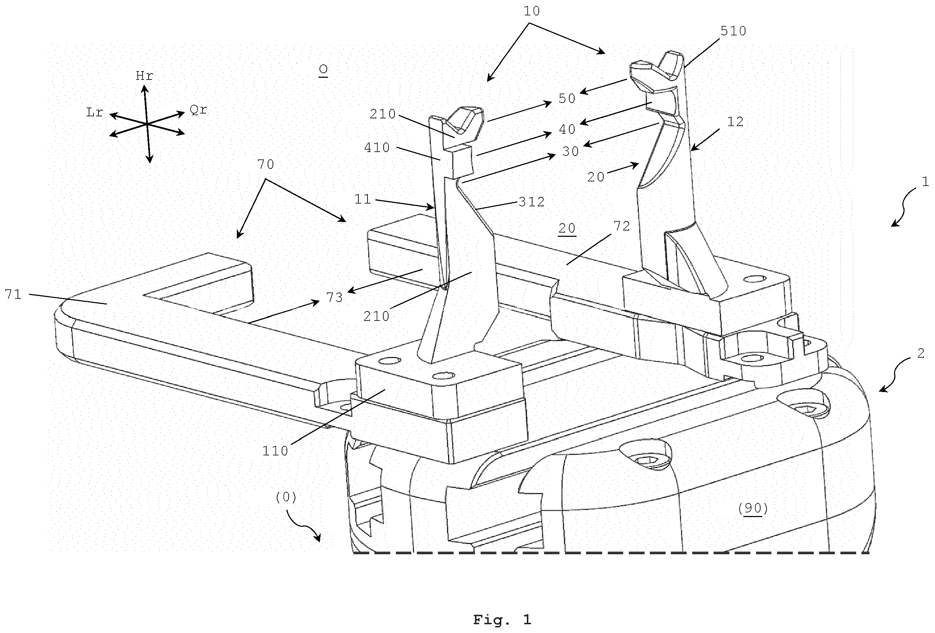

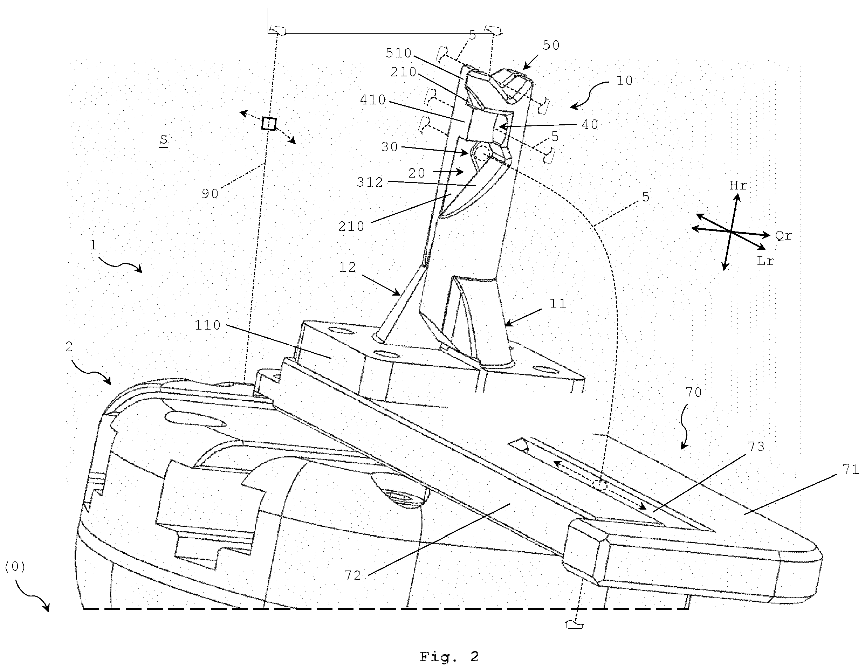

Die Fig. 1 und 2 zeigen einen manipulatorseitigen freien Endabschnitt eines Greifermoduls 1 eines automatisierten Manipulators 0 (Roboterarm) eines Industrieroboters. Das Greifermodul 1 umfasst einen Greiferantrieb 2 mit einem daran montierten, erfindungsgemäßen Greifer 10 ((End-)Effektor) für die Positionierung (Greifen, Verlegen, Führen (loses Halten)), Fixierung (festes Halten), Platzierung, Manipulierung etc. von biegeschlaffen, elektrischen Kabeln 5 zur Herstellung von Kabelbäumen z. B. für Kraftfahrzeuge.

Der multifunktionale Greifer 10 umfasst dabei einen ersten langgestreckten Greiffinger 11 und einen zweiten langgestreckten Greiffinger 12. Hierbei ist ein jeweiliger Greiffinger 11, 12 bevorzugt auf einer linear bewegbaren Vorrichtung (nicht dargestellt, vgl. auch oben Schlitten) des Greiferantriebs 2 montiert, wobei zwischen der Vorrichtung und dem Greiffinger 11, 12 ein Führungselement 71, 72 einer Kabel-Führungseinrichtung 70 (vgl. unten) des Greifer 10 eingerichtet sein kann. In anderen Ausführungsformen können die Vorrichtungen auch auf gekurvten, z. B. kreisabschnittförmigen, Bahnen, bewegbar im Greiferantrieb 2 eingerichtet sein.

Vorliegend bilden die Längserstreckungen der Greiffinger 11, 12 bzw. eine Längserstreckung eines Greiffingers 11, 12 eine Hochrichtung Hr des Greifers 10. Ferner ist eine Längsrichtung Lr des Greifers 10 durch eine idealisierte, geradlinige Längserstreckung des Kabels 5 definiert, das sich in einer der im Greifer 10 in einer Schließstellung S etablierbaren Einrichtungen 30, 40, 50 (vgl. Fig. 2 und unten) befindet. Darüber hinaus ist eine Querrichtung Qr des Greifers 10 insbesondere durch eine lineare Bewegungsrichtung der Greiffinger 11, 12 bzw. der Vorrichtungen definiert. Dieses Koordinatensystem ist dem Greiferantrieb 2 immanent und bewegt sich mit diesem mit, wenn der Manipulator 0 bewegt wird.

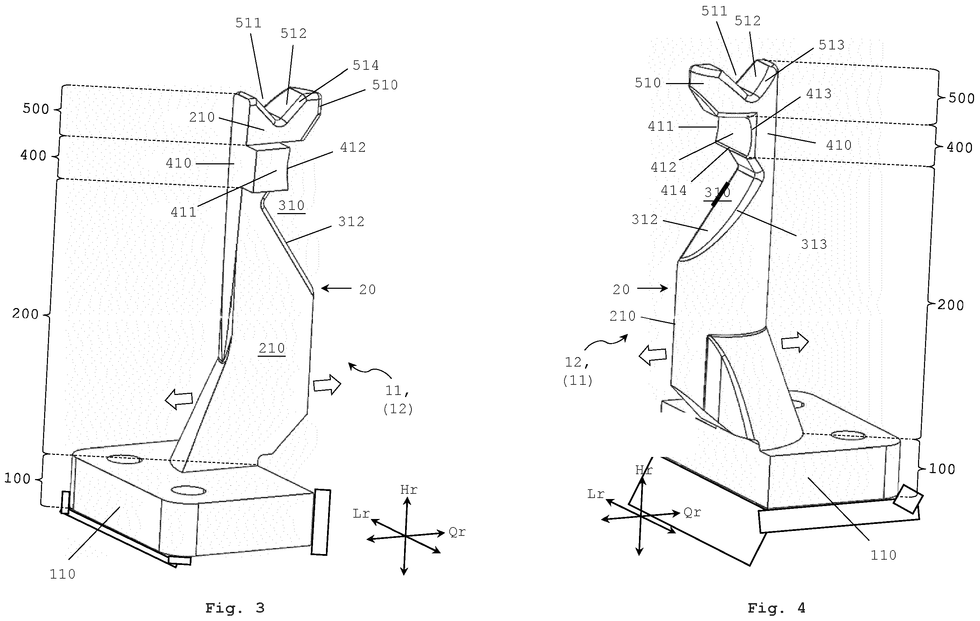

Die Greiffinger 11, 12 sind insbesondere mittels der Vorrichtungen aus einer Offenstellung O des Greifers 10 (vgl. Fig. 2, Greiffinger 11, 12 wesentlich voneinander entfernt) in eine Schließstellung S des Greifers 10 (vgl. Fig. 3, Greiffinger 11, 12 wesentlich aufeinander zubewegt) aufeinander zubewegbar und aus einer/der Schließstellung S wieder eine/die Offenstellung O voneinander wegbewegbar im Greifer 10 eingerichtet.

Hierbei kann der Greifer 10, insbesondere je nachdem wo sich das Kabel 5 am/im Greifer 10 befindet, eine Mehrzahl von Schließstellungen S aufweisen. So kann z. B. eine Schließstellung S des Greifers 10, in welchem sich das Kabel 5 in einer Kabel-Fixiereinrichtung 40 (vgl. unten) des Greifers 10 befindet (nicht dargestellt), von einer Schließstellung S des Greifers 10 abweichen, in welchem sich das Kabel 5 in einer Kabel-Durchführungseinrichtung 30 (vgl. unten, hierbei können die Kabel-Backen 410 (nahezu) aneinander anliegen) des Greifers 10 befindet (vgl. Fig. 2). Analoges kann für die Kabel-Stempeleinrichtung 50 (vgl. unten) des Greifers 10 gelten.

Ein einzelner Greiffinger 11, 12, vgl. die Fig. 3 und 4, gliedert sich vorliegend in einen Montageabschnitt 100, einen Führungsabschnitt 200, eine Kabel-Führungsausnehmung 310, einen Backenabschnitt 400 und einen Stempelabschnitt 500. Hierbei ist bzw. sind der Montageabschnitt 100, der Führungsabschnitt 200, der Backenabschnitt 400 und/oder der Stempelabschnitt 500 optional im Greiffinger 11, 12 einrichtbar. Die ggf. einzige (vgl. oben) Kabel-Führungsausnehmung 310 eines Greifers 10 ist in Querrichtung Qr ausgehend von einer Greiferinnenseite 20 des Greifers 10 in den betreffenden Greiffinger 11, 12 hineingehend eingerichtet.

Der Montageabschnitt 100 kann einen z. B. quaderförmigen oder zylinderförmigen Montagesockel 110 zum lösbaren Befestigen des Greiffingers 11, 12 aufweisen. Hierbei kann der Montagesockel 110 z. B. auf einem Führungselement 71, 72 (vgl. unten) oder direkt auf dem Greiferantrieb 2 (Vorrichtung) etc. montiert sein. Insbesondere ist es möglich, mittels Befestigungsmitteln den Montagesockel 110 des Greiffingers 11, 12 zusammen mit einem Führungselement 71, 72 auf dem Greiferantrieb 2 (Vorrichtung) zu montieren.

Der Führungsabschnitt 200 dient einer Distanzerzeugung der eigentlich funktionalen Abschnitte 310, 400, 500 des Greif-fingers 11, 12, damit dieser seine Arbeit ungestört von einem freien Ende des Greiferantriebs 2 erledigen kann. Ferner weist der Führungsabschnitt 200 eine Fingerführungsfläche 210 zur gegenseitigen Führung zweier einander betreffender Greiffinger 11, 12 auf. Hierbei erstreckt sich die Fingerführungsfläche 210 bevorzugt lediglich in Hochrichtung Hr und Querrichtung Qr. Die zwei Greiffinger 11, 12 sind nun derart im Greifer 10 eingerichtet, dass deren Fingerführungsflächen 210, 210 beim Aufeinanderzubewegen der Greiffinger 11, 12 in Querrichtung Qr partiell aneinander vorbeigleiten und sich gegenseitig in Längsrichtung Lr abstützen können.

Ferner ist die Kabel-Führungsausnehmung 310 vollständig oder wenigstens teilweise (nicht dargestellt, in diesem Fall kann sich die Kabel-Führungsausnehmung 310 zusätzlich noch in den Backenabschnitt 400 hineinerstrecken) in den Führungsabschnitt 200 ausgehend von der Greiferinnenseite 20 im Greiffinger 11, 12 eingerichtet. Hierbei kann die Kabel-Führungsausnehmung 310 in einer von der Hochrichtung Hr und der Querrichtung Qr aufgespannten Ebene einen u-förmigen oder v-förmigen Querschnitt aufweisen. Die Schenkel des u-förmigen oder v-förmigen Querschnitts können dabei unterschiedlich lang ausgebildet sein (vgl. oben).

Die Kabel-Führungsausnehmung 310 weist dabei eine in Längsrichtung Lr fluchtende und sich sowohl in Hochrichtung Hr und Querrichtung Qr erstreckende Kabel-Führungsfläche 312 auf. D. h. die wesentliche Kabel-Führungsausnehmung 310 fluchtet mit keiner dieser beiden Richtungen Hr, Qr; je nach einer Ausführungsform ggf. von einem Grund der Kabel-Führungsausnehmung 310 abgesehen, der sich, neben seiner Erstreckung in Längsrichtung Lr ausschließlich in Hochrichtung Hr erstrecken kann.

Zwei Flächenabschnitte, z. B. obige Schenkel, der Kabel-Führungsausnehmung 310 können gegenüber der Hochrichtung Hr und Querrichtung Qr in einem Winkel angeordnet sein und bevorzugt einen Zwischenwinkel von ca. 75°-90° bis ca. 135°-160° aufweisen. Insbesondere abseits der Fingerführungsfläche 210 kann die Kabel-Führungsausnehmung 310 eine Fase 312 aufweisen. Ferner kann eine Fase zur Fingerführungsfläche 210 eingerichtet sein (innen im Greifer 10).

Der Backenabschnitt 400 weist vorliegend eine Kabel-Backe 410 derart auf, dass die zwei Kabel-Backen 410, 410 der Greiffinger 11, 12 im Greifer 10 die Kabel-Fixiereinrichtung 40 in einer Schließstellung S zwischen sich ausbilden und dort das Kabel 5 fest halten können. Eine Kabel-Backe 410 kann dabei von einem sich in Hochrichtung Hr erstreckenden Bereich des Greiffingers 11, 12 sowie von einem Backenfortsatz 411 gebildet sein, welcher in Längsrichtung Lr von diesem Bereich vom Greiffinger 11, 12 wegkragt. Eine Backenfläche 412 einer solcherart zusammengesetzten Kabel-Backe 410 kann insbesondere konvex ausgebildet sein und eine Antirutschbeschichtung aufweisen.

D. h. in einer Schließstellung S ist die Kabel-Fixiereinrichtung 40 von einander wenigstens teilweise direkt gegenüberliegenden Kabel-Backen 410, 410 ausgebildet. Hierbei sind die wegkragenden Backenfortsätze 411, 411 der Greiffinger 11, 12 bevorzugt derart im Greifer 10 eingerichtet, dass diese einander in Querrichtung Qr direkt gegenüberliegen. D. h. auch, dass der Backenfortsatz 411 eines Greiffingers 11, 12 in eine erste Längsrichtung Lr wegsteht, wohingegen der Backenfortsatz 411 des anderen Greiffingers 12, 11 in eine der ersten Längsrichtung Lr entgegengesetzte zweite Längsrichtung Lr wegsteht.

Insbesondere in Längsrichtung Lr gegenüberliegend zur Fingerführungsfläche 210 kann die Kabel-Backe 410 eine Fase 413 aufweisen. Ferner kann eine Fase zwischen der in Längsrichtung Lr freien Außenseite des Backenfortsatzes 411 und der Backenfläche 412 eingerichtet sein (nicht dargestellt). Des Weiteren kann eine Fase 414 zwischen der Backenfläche 412 und der Kabel-Führungsfläche 312 eingerichtet sein.

Der Stempelabschnitt 500 kann einen Kabel-Stempel 510 aufweisen. Hierbei kann nur ein Greiffinger 11, 12 einen Kabel-Stempel 510 aufweisen oder es können beide Greiffinger 11, 12 einen Kabel-Stempel 510 aufweisen (vgl. oben). Ist letzteres der Fall, so können die Kabel-Stempel 510 in einer Schließstellung S eine Stempeleinrichtung 50 des Greifers 10 bilden. Prinzipiell ist es jedoch möglich, dass ein einzelner Kabel-Stempel 510 im Wesentlichen dieselbe Funktion ausüben kann, wie eine aus zwei Kabel-Stempeln 510, 510 zusammengesetzte Stempeleinrichtung 50.

Ausgehend von einem in Hochrichtung Hr freien Ende des Greiffingers 11, 12, weist der Kabel-Stempel 510 eine in den Greiffinger 11, 12 hineingehende Stempel-Aufnahmeausnehmung 511 auf. In einer von der Querrichtung Qr und der Hochrichtung Hr aufgespannten Ebene kann die Stempel-Aufnahmeausnehmung 511 einen u-förmigen oder v-förmigen Querschnitt aufweisen. D. h. eine Stempelfläche 512 der Stempel-Aufnahmeausnehmung 511 ist u-förmig oder v-förmig ausgebildet. Ein Zwischenwinkel einer v-förmigen Stempel-Aufnahmeausnehmung 511 beträgt bevorzugt ca. 75°-90° bis ca. 135°-160°.

Insbesondere in Längsrichtung Lr gegenüberliegend zur Fingerführungsfläche 210 kann die Stempel-Aufnahmeausnehmung 511 eine Fase 513 aufweisen (außen am Greifer 10). Dieser Fase 513 in Längsrichtung Lr gegenüberliegend kann die Stempel-Aufnahmeausnehmung 511 ebenfalls eine Fase 514 aufweisen (innen im Greifer 10). Darüber hinaus kann die Stempel-Aufnahmeausnehmung 511 am freien Ende in Hochrichtung Hr des Greiffingers 11, 12 einander in Querrichtung Qr gegenüberliegende Fasen aufweisen.

Je nach einer Anwesenheit der Abschnitte 200, 310, 400, 500 der einander gegenüberliegenden Greiffinger 11, 12 im Greifer 10 ist in einer Schließstellung S des Greifers 10 eine Kabel-Durchführungseinrichtung 30 zum wenigstens losen Halten des Kabels 5 (z. B. zum Verlegen, Führen, Platzieren etc. des Kabels 5), eine Kabel-Fixiereinrichtung 40 zum wenigstens festen Halten des Kabels 5 (z. B. zum Platzieren, Manipulieren etc. des Kabels 5), und/oder eine Kabel-Stempeleinrichtung 50 zum Platzieren des Kabels 5 (z. B. durch eine Vorschubbewegung des Greifers 10) einrichtbar bzw. ausbildbar.

Hierbei können die Kabel-Führungsausnehmungen 310, 310 der zwei Greiffinger 11, 12 in einer Schließstellung S die Kabel-Durchführungseinrichtung 30 des Greifers 10 zwischen sich ausbilden. Ferner können die Kabel-Backen 410, 410 der Backenabschnitte 400, 400 der zwei Greiffinger 11, 12 in einer Schließstellung S die Kabel-Fixiereinrichtung 40 des Greifers 10 zwischen sich ausbilden. Des Weiteren können die Kabel-Stempel 510, 510 der Stempelabschnitte 500 der zwei Greiffinger 11, 12 in einer Schließstellung S die Kabel-Stempeleinrichtung 50 des Greifers 10 bilden.

Die Kabel-Führungsfläche 312 der Kabel-Führungsausnehmung 310 oder die Kabel-Führungsflächen 312, 312 der Kabel-Führungsausnehmungen 310, 310 sind dabei derart eingerichtet, dass sie das Kabel 5 mit seiner Längserstreckung in Längsrichtung Lr in einer Schließstellung S im Greifer 10 lose halten können. Eine Haltefunktion zum festen Halten des Kabels 5 in der Kabel-Durchführungseinrichtung 30 (geschlossenere Schließstellung S) kann ggf. eingerichtet ein. Vorliegend ist eine Kabel-Führungsfläche 312 mit ihrem z. B. u-förmigen oder v-förmigen Querschnitt z. B. derart im Greiffinger 11, 12 eingerichtet, dass ihr Querschnitt linienförmig in einer Ebene erscheint, welche von der Hochrichtung Hr und der Querrichtung Qr aufgespannt ist (Fase(n) ausgenommen).

Die Backenfläche 412 der Kabel-Backe 410 oder die Backenflächen 412, 412 der Kabel-Backen 410, 410 sind dabei derart eingerichtet, dass sie das Kabel 5 mit seiner Längserstreckung in Längsrichtung Lr in einer Schließstellung S im Greifer 10 fest halten können. Eine Haltefunktion zum losen Halten des Kabels 5 in der Kabel-Fixiereinrichtung 40 (offenere Schließstellung S) kann ggf. eingerichtet ein. Vorliegend ist eine Backenfläche 412 mit ihrem z. B. konvexen Verlauf z. B. derart im Greiffinger 11, 12 eingerichtet, dass ihr konvexer Verlauf linienförmig in einer Ebene erscheint, welche von der Hochrichtung Hr und der Querrichtung Qr aufgespannt ist (Fase(n) ausgenommen).

Die Stempelfläche 512 des Kabel-Stempels 510 oder die Stempelflächen 512, 512 der Kabel-Stempel 510, 510 sind dabei derart eingerichtet, dass darin das Kabel 5 mit seiner Längserstreckung in Längsrichtung Lr in einer Offenstellung O, einer Zwischenstellung oder einer Schließstellung S im Greifer 10 platziert werden kann. Vorliegend ist eine Stempelfläche 512 mit ihrem z. B. u-förmigen oder v-förmigen Querschnitt z. B. derart im Greiffinger 11, 12 eingerichtet, dass ihr Querschnitt linienförmig in einer Ebene erscheint, welche von der Hochrichtung Hr und der Querrichtung Qr aufgespannt ist (Fase(n) ausgenommen).

D. h. vorliegend fluchten eine Kabel-Führungsfläche 312 einer Kabel-Führungsausnehmung 310 eines Greiffingers 11, 12 bzw. die Kabel-Führungsflächen 312, 312 der Kabel-Führungsausnehmungen 310, 310 des Greifers 10, eine Backenfläche 412 einer Kabel-Backe 410 eines Greiffingers 11, 12 bzw. die Backenflächen 412, 412 der Kabel-Backen 410, 410 des Greifers 10, sowie eine Stempelfläche 512 eines Kabel-Stempels 510 eines Greiffingers 11, 12 bzw. die Stempelflächen 512, 512 der Kabel-Stempel 510, 510 des Greifers 10 im Wesentlichen bevorzugt alle in Längsrichtung Lr (vgl. z. B. Fig. 4 und 2).

Der Greifer 10 kann eine Kabel-Führungseinrichtung 70 zum Fangen und/oder Führen des Kabels 5 aufweisen. Die Kabel-Führungseinrichtung 70 weist vorliegend zwei aufeinander zu bewegbare und wieder voneinander wegbewegbare Führungselemente 71, 72 auf. Hierbei kann ein Führungselement 71 im Wesentlichen I-förmig und das andere Führungselement 72 im Wesentlichen i-förmig ausgebildet sein. In einer Schließstellung S übergreift ein Schenkel des I-förmigen Führungselements 71 das i-förmige Führungselement 72 und erzeugt derart einen langgestreckten Kabeldurchgang 73 in der Kabel-Führungseinrichtung 70 für das Kabel 5 (vgl. Fig. 2).

Beim Fangen des Kabels 5 in der Kabel-Führungseinrichtung 70 wird die Kabel-Führungseinrichtung 70 in einer Offenstellung O über das Kabel 5 bewegt und in der zeitlichen Folge wird die Kabel-Führungseinrichtung 70 geschossen. Hierbei wird das Kabel 5 mit einem Mittenabschnitt im langgestreckten Kabeldurchgang 73 der Kabel-Führungseinrichtung 70 aufgenommen (vgl. Fig. 2). In der zeitlichen Folge kann das Kabel 5 in einer der Einrichtungen 30, 40, 50, insbesondere in der Kabel-Durchführungseinrichtung 30 oder ggf. auch der Kabel-Fixiereinrichtung 40 aufgenommen werden, wofür das Greifermodul 1 bevorzugt um ca. 90° um die Querrichtung gedreht wird.

Beim Aufnehmen des Kabels 5 in der Kabel-Durchführungseinrichtung 30 des Greifers 10 gleitet das Kabel 5 an wenigstens einer der Flächenabschnitte der Kabel-Führungsausnehmungen 310, 310, also der sich ausbildenden Kabel-Durchführungseinrichtung 30, entlang bis in ein Zentrum der in einer Schließstellung S vollständig eingerichteten Kabel-Führungsausnehmung 310 (vgl. Fig. 2 oben, Kabel 5 gestrichelt).

Beim Aufnehmen des Kabels 5 in der Kabel-Fixiereinrichtung 40 des Greifers 10 drücken die Kabel-Backen 410, 410 mit ihren Backenflächen 412, 412, insbesondere den Backenflächen 412, 412 der Backenfortsätze 411, 411, gegeneinander in Querrichtung Qr auf das Kabel 5 und halten dieses dabei fest (vgl. Fig. 2 oben, Kabel 5 gestrichelt). Hierbei helfen die bevorzugt konvexen Backenflächen 412, 412 das Kabel 5 in der Kabel-Fixiereinrichtung 40 aufzunehmen und zu zentrieren.

Beim Aufnehmen des Kabels 5 in der Kabel-Stempeleinrichtung 50 bzw. einem einzigen Kabel-Stempel 510 des Greifers 10 wird das Kabel 5 in den Stempel-Aufnahmeausnehmungen 511, 511 bzw. der Stempel-Aufnahmeausnehmung 511 aufgenommen (vgl. Fig. 2 oben, Kabel 5 gestrichelt). Beim Vorbewegen des Kabels 5 in die Stempel-Aufnahmeausnehmungen 511, 511 bzw. die Stempel-Aufnahmeausnehmung 511 hilft die bevorzugt u-förmige oder v-förmige Ausbildung der Stempelfläche 512 bzw. der Stempelflächen 512, 512 das Kabel 5 aufzunehmen und zu zentrieren, wobei natürlich der Greifer 10 in Richtung des Kabels 5 bewegt wird.

Je nach einer zu erledigenden Aufgabe beim Verlegen eines Kabelbaums ist das Kabel 5 an/in der Kabel-Führungseinrichtung 70, an/in der Kabel-Durchführungseinrichtung 30, an/in der Kabel-Fixiereinrichtung 40 oder an/in der Kabel-Stempeleinrichtung 50 aufnehmbar bzw. aufgenommen.

Der Greifer 10 kann einen bevorzugt flexiblen Kabelniederhalter 90 (vgl. Fig. 2, Kabelniederhalter 90 strichpunktiert) aufweisen. Der Kabelniederhalter 90 hilft beim Fangen und Verlegen des Kabels 5, z. B. beim Fangen zum Niederhalten eines Terminals des Kabels 5 oder beim Verlegen zum Verhindern eines Herausspringens eines bereits verlegten Kabels 5 oder des gerade eben zu verlegenden Kabels 5. Bevorzugt ist der Kabelniederhalter 90 als eine vergleichsweise dünne und quaderförmige Lage seitlich am Greifermodul 1 bzw. Greiferantrieb 2 montiert.

### Bezugszeichenliste

- 0: automatisierter und/oder manueller Manipulator
- 1: Greifermodul
- 2: Greiferantrieb
- 5: (biegeschlaffes, elektrisches) Kabel für einen Kabelbaum bzw. Kabel eines Kabelbaums, aufweisend eine (elektrische) Leitung oder eine (vor-)konfektionierte Leitung

- 10: (multifunktionaler) Greifer ((End-)Effektor) für die Positionierung (loses Halten), Fixierung (festes Halten), Platzierung, Manipulierung etc. von Kabeln 5 zur Herstellung von Kabelbäumen
- 11: (erster) Greiffinger des Greifers 10
- 12: (zweiter) Greiffinger des Greifers 10
- 20: Greiferinnenseite des Greiffingers 11, 12
- 30: Kabel-Durchführungseinrichtung des Greifers 10 (nur in einer Schließstellung S)
- 40: Kabel-Fixiereinrichtung des Greifers 10 (nur in einer Schließstellung S)
- 50: Kabel-Stempeleinrichtung des Greifers 10 (nur in einer Schließstellung S)
- 70: Kabel-Führungseinrichtung zum Fangen und/oder Führen des Kabels 5
- 71: Führungselement Greiffinger 11, bevorzugt I-förmig
- 72: Führungselement Greiffinger 12, bevorzugt i-förmig
- 73: Kabeldurchgang des Greifers 10
- 90: (flexibler) Kabelniederhalter

- 100: Montageabschnitt des Greiffingers 11, 12
- 110: Montagesockel des Montageabschnitts 100
- 200: Führungsabschnitt des Greiffingers 11, 12
- 210: Fingerführungsfläche des Führungsabschnitts 200
- 310: Kabel-Führungsausnehmung, Abschnitt des Greiffingers 11, 12
- 312: Kabel-Führungsfläche
- 313: Fase
- 400: Backenabschnitt des Greiffingers 11, 12
- 410: Kabel-Backe des Backenabschnitts 400
- 411: Backenfortsatz der Kabel-Backe 410
- 412: Backenfläche
- 413: Fase
- 414: Fase
- 500: Stempelabschnitt des Greiffingers 11, 12
- 510: Kabel-Stempel des Stempelabschnitts 500
- 511: Stempel-Aufnahmeausnehmung des Kabel-Stempels 511
- 512: Stempelfläche
- 513: Fase
- 514: Fase

- Hr: Hochrichtung des Greifermoduls 1, des Greifers 10, der Greiffinger 11, 12
- Lr: Längsrichtung des Greifermoduls 1, des Greifers 10, der Greiffinger 11, 12
- Qr: Querrichtung des Greifermoduls 1, des Greifers 10, der Greiffinger 11, 12

- O: Offenstellung des Greifermoduls 1, des Greifers 10, der Greiffinger 11, 12; Greiffinger 11, 12 dabei wesentlich voneinander entfernt
- S: Schließstellung des Greifermoduls 1, des Greifers 10, der Greiffinger 11, 12; Greiffinger 11, 12 dabei wesentlich aufeinander zubewegt

## Patentansprüche

1. Greifer (10) für einen automatisierten und/oder manuellen Manipulator (0) für die Herstellung von elektrischen Kraftfahrzeug-Kabelbäumen, mit
zwei zwischen wenigstens einer Offenstellung (O) und wenigstens einer Schließstellung (S) des Greifers (10) gegeneinander bewegbaren Greiffingern (11, 12) zur Positionierung eines biegeschlaffen, elektrischen Kabels (5) bei der Herstellung eines Kraftfahrzeug-Kabelbaums, für eine Positionieraufgabe mithilfe des Greifers (10):
einerseits zwischen den Greiffingern (11, 12) eine an einem Umfang im Wesentlichen geschossene Kabel-Durchführungseinrichtung (30) zum wenigstens losen Halten des Kabels (5) ausbildbar und in der Schließstellung (S) ausgebildet ist, und
andererseits an wenigstens einem Greiffinger (11, 12) ein Kabel-Stempel (510) für ein Platzieren des Kabels (5) durch eine Vorschubbewegung des Greifers (10) eingerichtet ist, wobei
mittels des Kabel-Stempels (510) der Greiffinger (11, 12) in der Schließstellung (S) das Kabel (5) platzierbar ist, wobei
mittels der Kabel-Stempel (510) der Greiffinger (11, 12) eine Kabel-Stempeleinrichtung (50) des Greifers (10) in der Schließstellung (S) ausbildet ist,
**dadurch gekennzeichnet, dass**
eine Stempel-Aufnahmeausnehmung (511) ausgehend von einem freien Ende des betreffenden Greiffingers (11, 12) in Hochrichtung (Hr) in den betreffenden Kabel-Stempel (510) hineingehend eingerichtet ist.

2. Greifer (10) gemäß vorhergehendem Anspruch, **dadurch gekennzeichnet, dass** für eine Positionieraufgabe mithilfe des Greifers (10) weitererseits zwischen den Greiffingern (11, 12) eine Kabel-Fixiereinrichtung (40) zum wenigstens festen Halten des Kabels (5) ausbildbar und/oder in der Schließstellung (S) ausbildet ist.

3. Greifer (10) gemäß einem der vorhergehenden Ansprüche, **dadurch gekennzeichnet, dass**
in einer von einer Querrichtung (Qr) und der Hochrichtung (Hr) aufgespannten Ebene die Stempel-Aufnahmeausnehmung (511) einen u-förmigen oder v-förmigen Querschnitt aufweist, wobei
eine Stempelfläche (512) der Stempel-Aufnahmeausnehmung (511) u-förmig oder v-förmig ausgebildet ist,
wobei ein Zwischenwinkel der v-förmigen Stempel-Aufnahmeausnehmung (511) bevorzugt 75°-90° bis 135°-160° beträgt.

4. Greifer (10) gemäß einem der vorhergehenden Ansprüche, **dadurch gekennzeichnet, dass** die Greiffinger (11, 12) mit ihren Längserstreckungen in die Hochrichtung (Hr) des Greifers (10) verlaufen und die Greiffinger (11, 12) in Querrichtung (Qr) des Greifers (10) gegeneinander bewegbar im Greifer (10) eingerichtet sind.

5. Greifer (10) gemäß einem der vorhergehenden Ansprüche, **dadurch gekennzeichnet, dass** beim Bewegen des Greifers (10) in die Schließstellung (S):
• die Greiffinger (11, 12) mit ihren Greiferinnenseiten (20, 20) gegeneinander ansitzbar oder die Greiffinger (11, 12) in Querrichtung (Qr) partiell aneinander vorbeigleitbar im Greifer (10) eingerichtet sind,
• wobei sich der Greiffinger (11, 12) in einen Führungsabschnitt (200), eine Kabel-Führungsausnehmung (310), bevorzugt einen Backenabschnitt (400) und einen Stempelabschnitt (500) gliedert,
• sowie beim partiellen aneinander Vorbeigleiten der Greiffinger (11, 12), Fingerführungsflächen (210) der Führungsabschnitte (200) aneinander wenigstens teilweise aneinander anliegen und sich gegenseitig abstützend im Greifer (10) eingerichtet sind, und/oder
• sowie beim partiellen aneinander Vorbeigleiten der Greiffinger (11, 12), sich die Fingerführungsflächen (210) gegenseitig in Längsrichtung (Lr) des Greifers (10) abstützen und im Wesentlichen parallel zueinander im Greifer (10) eingerichtet sind.

6. Greifer (10) gemäß Anspruch 5, **dadurch gekennzeichnet, dass**:
• die Kabel-Durchführungseinrichtung (30) von in Querrichtung (Qr) des Greifers (10) einander gegenüberliegenden Abschnitten der Greiffinger (11, 12) in der Schließstellung (S) ausgebildet ist,
• die Kabel-Durchführungseinrichtung (30) von wenigstens einer Kabel-Führungsausnehmung (310) des Greiffingers (11, 12) und/oder
• die Kabel-Führungsausnehmung (310) ausgehend von der Greiferinnenseite (20) in Querrichtung (Qr) in den betreffenden Greiffinger (11, 12) hineingehend eingerichtet ist.

7. Greifer (10) gemäß einem der Ansprüche 2 bis 6, **dadurch gekennzeichnet, dass**:
• die Kabel-Fixiereinrichtung (40) wenigstens von einander gegenüberliegenden Abschnitten der Greiffinger (11, 12) in der Schließstellung (S) ausgebildet ist,
• die Kabel-Fixiereinrichtung (40) von einander wenigstens teilweise direkt gegenüberliegenden Kabel-Backen (410) der Backenabschnitte (400) in der Schließstellung (S) ausgebildet ist,
• eine Kabel-Backe (410) einen in Längsrichtung (Lr) vom Backenabschnitt (400) des betreffenden Greiffingers (11, 12) nach innen in den Greifer (10) wegkragenden Backenfortsatz (411) umfasst, und/oder
• die Backenflächen (412) der Kabel-Fixiereinrichtung (40) an ihren einander gegenüberliegenden Flächen eine Antirutschbeschichtung aufweisen.

8. Greifer (10) gemäß einem der Ansprüche 5 bis 7, **dadurch gekennzeichnet, dass**:
• die Kabel-Stempeleinrichtung (50) von einander in Längsrichtung (Lr) versetzen Kabel-Stempeln (510) der Stempelabschnitte (500) in der Schließstellung (S) ausgebildet ist,
• die einander in Längsrichtung (Lr) zugewandten Seiten der Kabel-Stempel (510) analog zu den Führungsabschnitten (200) Fingerführungsflächen (210) aufweisen,
• in der Schließstellung (S) die Kabel-Stempel (510) als Kabel-Stempeleinrichtung (50) in Längsrichtung (Lr) im Wesentlichen fluchtend zur Deckung kommen.

9. Greifer (10) gemäß einem der vorhergehenden Ansprüche, **dadurch gekennzeichnet, dass**:
• der Greifer (10) zwei, insbesondere lediglich zwei, im Wesentlichen identische Greiffinger (11, 12) umfasst,
• identische Greiffinger (11, 12) um die Hochrichtung (Hr) um 180° gedreht im Greifer (10) eingerichtet sind, und/oder
• wenigstens ein Greiffinger (11, 12) selbst nicht rotationssymmetrisch oder spiegelsymmetrisch ausgebildet ist.

10. Greifer (10) gemäß einem der vorhergehenden Ansprüche, **dadurch gekennzeichnet, dass** der Greifer (10) eine Kabel-Führungseinrichtung (70) für das Kabel (5) derart aufweist, dass:
• durch den Greifer (10) mittels der Kabel-Führungseinrichtung (70) das Kabel (5) im Greifer (10) fangbar ist,
• beim Verlegen des Kabels (5) mittels der Kabel-Führungseinrichtung (70) das Kabel (5) führbar ist, und/oder
• durch die Kabel-Führungseinrichtung (70) und durch die Kabel-Durchführungseinrichtung (30) das Kabel (5) verlegbar ist.

11. Greifer (10) nach Anspruch 10, **dadurch gekennzeichnet, dass**:
• die Kabel-Führungseinrichtung (70) zwei aufeinander zubewegbare und wieder voneinander wegbewegbare Führungselemente (71, 72) aufweist,
• in der Schließstellung (S) zwischen den Führungselementen (71, 72) ein Kabeldurchgang (73) des Greifers (10) zum Fangen und Führen des Kabels (5) ausbildbar ist,
• an/auf dem betreffenden Führungselement (71, 72) jeweils der Greiffinger (11, 12) montiert ist, und/oder
• das eine Führungselement (71) I-förmig und das andere Führungselement (72) i-förmig ausgebildet ist.

12. Greifer (10) gemäß einem der vorhergehenden Ansprüche, **dadurch gekennzeichnet, dass**:
• der Greifer (10) einen Kabelniederhalter (90) für das gefangene Kabel (5) und/oder ein bereits verlegtes Kabel (5) aufweist,
• der Kabelniederhalter (90) als ein flexibler Kabelniederhalter (90) ausgebildet ist, und/oder
• der Kabelniederhalter (90) derart ausgebildet ist, dass er abseits des eigentlichen Greifers (10) an einem Greiferantrieb (2) eines Greifermoduls (1) montierbar ist.

13. Greifer (10) gemäß einem der vorhergehenden Ansprüche, **dadurch gekennzeichnet, dass**:
• der Greifer (10) als ein Parallelgreifer (10), ein Schwenkgreifer oder ein Scherengreifer ausgebildet ist,
• ein eigentlicher Greiffinger (11, 12) stofflich einstückig oder integral ausgebildet ist, und/oder
• ein Greiffinger (11, 12) durch ein Spritzgussverfahren insbesondere aus einem Kunststoff hergestellt ist.

14. Greifermodul (1), Manipulator oder Industrieroboter, **dadurch gekennzeichnet, dass**
das Greifermodul (1), der Manipulator oder der Industrieroboter einen Greifer (10) gemäß einem der vorhergehenden Ansprüche und einen Greiferantrieb (2) aufweist.

15. Greifermodul (1) gemäß vorhergehendem Anspruch, **dadurch gekennzeichnet, dass**:
• das Greifermodul (1) den Greifer (10) gemäß einem der Ansprüche 11 bis 13 aufweist,
• der Greiferantrieb (2) wenigstens zwei gegeneinander bewegbare Vorrichtungen aufweist, auf welchen der Greifer (10) montiert ist,
• die zwei gegeneinander bewegbaren Vorrichtungen in Querrichtung linear oder schwenkend aufeinander zubewegbar und wieder voneinander wegbewegbar im Greiferantrieb (2) eingerichtet sind,
• jeweils ein einzelner Greiffinger (11, 12) über ein betreffendes Führungselement (71, 72) an/auf der jeweiligen, bewegbaren Vorrichtung des Greiferantriebs (2) montiert ist.

## Claims

1. Gripper (10) for an automated and/or manual manipulator (0) for producing electric motor vehicle cable harnesses, comprising
two gripping fingers (11, 12) which can be moved in relation to each other between at least one open position (O) and at least one closed position (S) of the gripper (10) for positioning a flexurally slack, electric cable (5) during production of a motor vehicle cable harness for a positioning task with the aid of the gripper (10):
firstly a cable feed-through device (30), which is substantially closed over a circumference, for at least loosely holding the cable (5) can be formed between the gripping fingers (11, 12) and is formed in the closed position (S), and
secondly a cable stamp (510) for positioning the cable (5) by way of a feed movement of the gripper (10) is arranged on at least one gripping finger (11, 12),
wherein
the cable (5) can be positioned using the cable stamp (510) of the gripping fingers (11, 12) in the closed position (S), wherein
a cable stamp device (50) of the gripper (10) is formed using the cable stamp (510) of the gripping fingers (11, 12) in the closed position (S),
**characterized in that**
a stamp receiving recess (511) is arranged in a manner extending from a free end of the respective gripping finger (11, 12) into the respective cable stamp (510) in the vertical direction (Hr).

2. Gripper (10) according to the preceding claim, **characterized in that**, for a positioning task with the aid of the gripper (10), furthermore a cable fixing device (40) for at least firmly holding the cable (5) can be formed between the gripping fingers (11, 12) and/or is formed in the closed position (S).

3. Gripper (10) according to either of the preceding claims, **characterized in that**
the stamp receiving recess (511) has a u-shaped or v-shaped cross section in a plane spanned by a transverse direction (Qr) and the vertical direction (Hr), wherein a stamp surface (512) of the stamp receiving recess (511) is u-shaped or v-shaped,
wherein an intermediate angle of the v-shaped stamp receiving recess (511) is preferably 75°-90° to 135°-160°.

4. Gripper (10) according to any of the preceding claims, **characterized in that** the gripping fingers (11, 12) run in the vertical direction (Hr) of the gripper (10) by way of their longitudinal extents and the gripping fingers (11, 12) are arranged in the gripper (10) such that they can be moved in relation to each other in the transverse direction (Qr) of the gripper (10).

5. Gripper (10) according to any of the preceding claims, **characterized in that**, when the gripper (10) moves to the closed position (S):
• the gripping fingers (11, 12) can be seated against each other by way of their gripper inner sides (20, 20) or the gripping fingers (11, 12) are arranged in the gripper (10) such that they can partially slide past each other in the transverse direction (Qr),
• wherein the gripping finger (11, 12) is divided into a guide section (200), a cable guide recess (310), preferably a jaw section (400) and a stamp section (500),
• and also when the gripping fingers (11, 12) partially slide past each other, finger guide surfaces (210) of the guide sections (200) at least partially bear against each other and are mutually supportively arranged in the gripper (10), and/or
• and also when gripping fingers (11, 12) partially slide past each other, the finger guide surfaces (210) are mutually supported in the longitudinal direction (Lr) of the gripper (10) and are arranged substantially parallel to each other in the gripper (10).

6. Gripper (10) according to Claim 5, **characterized in that**:
• the cable feed-through device (30) is formed by sections of the gripping fingers (11, 12), the sections being situated opposite each other in the transverse direction (Qr) of the gripper (10), in the closed position (S),
• the cable feed-through device (30) by at least one cable guide recess (310) of the gripping finger (11, 12) and/or
• the cable guide recess (310) is arranged in a manner extending from the gripper inner side (20) into the respective gripping finger (11, 12) in the transverse direction (Qr).

7. Gripper (10) according to any of Claims 2 to 6, **characterized in that**:
• the cable fixing device (40) is formed at least by sections of the gripping fingers (11, 12), the sections being situated opposite each other, in the closed position (S),
• the cable fixing device (40) is formed by cable jaws (410) of the jaw sections (400), the cable jaws being situated at least partially directly opposite each other, in the closed position (S),
• a cable jaw (410) comprises a jaw projection (411) which protrudes from the jaw section (400) of the respective gripping finger (11, 12) inwards into the gripper (10) in the longitudinal direction (Lr), and/or
• the jaw surfaces (412) of the cable fixing device (40) have an anti-slip coating on their surfaces which are situated opposite each other.

8. Gripper (10) according to any of Claims 5 to 7, **characterized in that**:
• the cable stamp device (50) is formed by cable stamps (510) of the stamp sections (500), the cable stamps being offset in relation to each other in the longitudinal direction (Lr), in the closed position (S),
• the sides of the cable stamps (510), the sides facing each other in the longitudinal direction (Lr), have finger guide surfaces (210), similarly to the guide sections (200),
• the cable stamps (510), as cable stamp device (50), are substantially in alignment in the longitudinal direction (Lr) in the closed position (S).

9. Gripper (10) according to any of the preceding claims, **characterized in that**:
• the gripper (10) comprises two, in particular only two, substantially identical gripping fingers (11, 12),
• identical gripping fingers (11, 12) are arranged rotated through 180° about the vertical direction (Hr) in the gripper (10), and/or
• at least one gripping finger (11, 12) itself is not rotationally symmetrical or mirror-symmetrical.

10. Gripper (10) according to any of the preceding claims, **characterized in that** the gripper (10) has a cable guide device (70) for the cable (5) in such a way that:
• the cable (5) can be captured in the gripper (10) by the gripper (10) using the cable guide device (70),
• the cable (5) can be guided using the cable guide device (70) when laying the cable (5), and/or
• the cable (5) can be laid through the cable guide device (70) and through the cable feed-through device (30).

11. Gripper (10) according to Claim 10, **characterized in that**:
• the cable guide device (70) has two guide elements (71, 72) which can be moved towards each other and away from each other again,
• a cable passage (73) of the gripper (10) for capturing and guiding the cable (5) can be formed between the guide elements (71, 72) in the closed position (S),
• the gripping finger (11, 12) is fitted to/on the respective guide element (71, 72), and/or
• the one guide element (71) is I-shaped and the other guide element (72) is i-shaped.

12. Gripper (10) according to any of the preceding claims, **characterized in that**:
• the gripper (10) has a cable retainer (90) for the captured cable (5) and/or a cable (5) that has already been laid,
• the cable retainer (90) is in the form of a flexible cable retainer (90), and/or
• the cable retainer (90) is formed in such a way that it can be fitted on a gripper drive (2) of a gripper module (1) away from the actual gripper (10).

13. Gripper (10) according to any of the preceding claims, **characterized in that**:
• the gripper (10) is in the form of a parallel gripper (10), a swivel gripper or a scissor gripper,
• an actual gripping finger (11, 12) is formed materially in one piece or integrally, and/or
• a gripping finger (11, 12) is produced by an injection moulding process, in particular from plastic.

14. Gripper module (1), manipulator or industrial robot, **characterized in that**
the gripper module (1), the manipulator or the industrial robot has a gripper (10) according to any of the preceding claims and a gripper drive (2).

15. Gripper module (1) according to the preceding claim, **characterized in that**:
• the gripper module (1) comprises the gripper (10) according to any of Claims 11 to 13,
• the gripper drive (2) comprises at least two devices which can be moved in relation to each other and on which the gripper (10) is fitted,
• the two devices which can be moved in relation to each other are arranged in the gripper drive (2) such that they can be moved towards each other and away from each other again in a linear or pivoting manner in the transverse direction,
• a single gripping finger (11, 12) is fitted to/on the respective, movable device of the gripper drive (2) via a respective guide element (71, 72).

## Revendications

1. Système de préhension (10) pour un manipulateur automatisé et/ou manuel (0) destiné à la fabrication de faisceaux de câbles de véhicules à moteur électrique, avec
deux doigts de préhension (11, 12) pouvant être déplacés l'un par rapport à l'autre entre au moins une position ouverte (O) et au moins une position fermée (S) du système de préhension (10) pour positionner un câble électrique flexible (5) lors de la fabrication d'un faisceau de câbles de véhicule à moteur, pour une tâche de positionnement à l'aide du système de préhension (10) :
d'une part, entre les doigts de préhension (11, 12), un dispositif de passage de câble (30) sensiblement coulé sur une périphérie, pouvant être formé pour maintenir au moins de manière lâche le câble (5) et étant formé dans la position fermée (S), et
d'autre part, un poinçon de câble (510) étant mis au point sur au moins un doigt de préhension (11, 12) pour placer le câble (5) par un mouvement d'avance du système de préhension (10),
le câble (5) pouvant être placé dans la position fermée (S) au moyen du poinçon de câble (510) du doigt de préhension (11, 12),
un dispositif de poinçon de câble (50) du système de préhension (10) étant formé dans la position fermée (S) au moyen des poinçons de câble (510) des doigts de préhension (11, 12),
**caractérisé en ce que**
un évidement de réception (511) de poinçon, partant d'une extrémité libre du doigt de préhension (11, 12) concerné, est mis au point de manière à s'étendre dans le poinçon de câble concerné (510) dans le sens vertical (Hr).

2. Système de préhension (10) selon la revendication précédente, **caractérisé en ce que**, pour une tâche de positionnement à l'aide du système de préhension (10), un dispositif de fixation de câble (40) pour maintenir au moins fixement le câble (5) peut en outre être formé entre les doigts de préhension (11, 12) et/ou est formé dans la position fermée (S).

3. Système de préhension (10) selon l'une des revendications précédentes, **caractérisé en ce que**
dans un plan formé par un sens transversal (Qr) et le sens vertical (Hr), l'évidement de réception (511) de poinçon comporte une section transversale en forme de U ou de V,
une surface de poinçon (512) de l'évidement de réception (511) de poinçon étant en forme de U ou de V,
un angle intermédiaire de l'évidement de réception (511) de poinçon en forme de V étant de manière préférée compris entre 75°-90° à 135°-160°.

4. Système de préhension (10) selon l'une des revendications précédentes, **caractérisé en ce que** les doigts de préhension (11, 12) s'étendent avec leur extension longitudinale dans le sens vertical (Hr) du système de préhension (10) et les doigts de préhension (11, 12) sont installés dans le système de préhension (10) de manière à pouvoir être déplacés l'un par rapport à l'autre dans le sens transversal (Qr) du système de préhension (10).

5. Système de préhension (10) selon l'une des revendications précédentes, **caractérisé en ce que** lorsque le système de préhension (10) est déplacé dans la position fermée (S) :
• les doigts de préhension (11, 12) peuvent reposer l'un contre l'autre par leurs faces intérieures (20, 20) de système de préhension ou les doigts de préhension (11, 12) sont installés dans le système de préhension (10) de manière à pouvoir coulisser en partie dans le sens transversal (Qr),
• le doigt de préhension (11, 12) étant divisé en une section de guidage (200), un évidement de guidage (310) de câble, de manière préférée une section de mâchoire (400) et une section de poinçon (500),
• des surfaces de guidage (210) de doigts des sections de guidage (200) reposant au moins en partie en appui l'une sur l'autre et étant installés dans le système de préhension (10) de manière à prendre appui mutuellement, dans le cas d'un glissement partiel des doigts de préhension (11, 12), et/ou
• les surfaces de guidage (210) de doigts prenant appui mutuellement dans le sens longitudinal (Lr) du système de préhension (10) et étant installées sensiblement parallèlement l'une à l'autre dans le système de préhension (10) également lors du glissement partiel les uns sur les autres des doigts (11, 12) de préhension.

6. Système de préhension (10) selon la revendication **5, caractérisé en ce que** :
• le dispositif de passage de câble (30) est formé par des sections des doigts de préhension (11, 12) se faisant face l'une à l'autre dans le sens transversal (Qr) du système de préhension (10) dans la position fermée (S),
• le dispositif de passage de câble (30) par au moins un évidement de guidage de câble (310) du doigt de préhension (11, 12) et/ou
• l'évidement de guidage (310) de câble est configuré de manière à s'étendre depuis le côté intérieur (20) de système de préhension jusque dans le doigt de préhension (11, 12) concerné dans le sens transversal (QR).

7. Système de préhension (10) selon l'une des revendications 2 à 6, **caractérisé en ce que** :
• le dispositif de fixation (40) de câble est formé au moins par des sections mutuellement opposées des doigts de préhension (11, 12) dans la position fermée (S),
• le dispositif de fixation (40) de câble est formé par des mâchoires de câble (410) des sections de mâchoire (400) se faisant face au moins en partie directement dans la position fermée (S),
• une mâchoire de câble (410) comprend un prolongement de mâchoire (411) faisant saillie vers l'intérieur dans le système de préhension (10) dans le sens longitudinal (Lr) à partir de la section de mâchoire (400) du doigt de préhension concerné (11, 12), et/ou
• les surfaces de mâchoire (412) du dispositif de fixation de câble (40) présentent un revêtement antidérapant sur leurs surfaces mutuellement opposées.

8. Système de préhension (10) selon l'une des revendications 5 à 7, **caractérisé en ce que** :
• le dispositif de poinçon de câble (50) est formé par des poinçons de câble (510) des sections de poinçon (500), décalés les uns des autres dans le sens longitudinal (Lr), dans la position fermée (S),
• les côtés des poinçons de câble (510) tournés l'un vers l'autre dans le sens longitudinal (Lr) comportent, de manière analogue aux sections de guidage (200), des surfaces de guidage des doigts (210),
• dans la position fermée (S), les poinçons de câble (510), en tant que dispositif de poinçon de câble (50), viennent coïncider sensiblement en alignement dans le sens longitudinal (Lr).

9. Système de préhension (10) selon l'une des revendications précédentes, **caractérisé en ce que** :
• le système de préhension (10) comprend deux doigts de préhension (11, 12) sensiblement identiques, en particulier seulement deux doigts de préhension,
• des doigts de préhension (11, 12) identiques sont mis en place dans le système de préhension (10) de manière tournée de 180° autour du sens vertical (Hr), et/ou
• au moins un doigt de préhension (11, 12) n'est pas lui-même symétrique en rotation ou symétrique en miroir.

10. Système de préhension (10) selon l'une des revendications précédentes, **caractérisé en ce que** le système de préhension (10) comporte un dispositif de guidage de câble (70) pour le câble (5) de telle manière que :
• le câble (5) peut être saisi dans le système de préhension (10) par le système de préhension (10) au moyen du dispositif de guidage de câble (70),
• le câble (5) peut être guidé au moyen du dispositif de guidage de câble (70) pendant la pose du câble (5), et/ou
• le câble (5) peut être posé à travers le dispositif de guidage de câble (70) et à travers le dispositif de passage de câble (30).

11. Système de préhension (10) selon la revendication 10, **caractérisé en ce que** :
• le dispositif de guidage de câble (70) comporte deux éléments de guidage (71, 72) qui peuvent être rapprochés et éloignés l'un de l'autre,
• un passage de câble (73) du système de préhension (10) pour saisir et guider le câble (5) peut être formé entre les éléments de guidage (71, 72) dans la position fermée (S),
• le doigt de préhension respectif (11, 12) est monté contre/sur l'élément de guidage respectif (71, 72), et/ou
• un élément de guidage (71) est en forme de I et l'autre élément de guidage (72) est en forme de I.

12. Système de préhension (10) selon l'une des revendications précédentes, **caractérisé en ce que** :
• le système de préhension (10) comporte un serre-câble (90) pour le câble (5) saisi et/ou un câble déjà posé (5),
• le serre-câble (90) est formé comme un serre-câble flexible (90), et/ou
• le serre-câble (90) est formé de telle manière qu'il peut être monté sur un entraînement (2) de système de préhension d'un module (1) de système de préhension à l'écart du système de préhension (10) proprement dit.

13. Système de préhension (10) selon l'une des revendications précédentes, **caractérisé en ce que** :
• le système de préhension (10) est formé comme un système de préhension parallèle (10), un système de préhension pivotant ou un système de préhension de cisaillement,
• un doigt de préhension (11, 12) proprement dit est formé de manière monobloc ou d'un seul tenant par liaison de matière, et/ou
• un doigt de préhension (11, 12) est fabriqué par un procédé de moulage par injection, en particulier à partir d'une matière plastique.

14. Module (1) de système de préhension, manipulateur ou robot industriel, **caractérisé en ce que**
le module (1) de système de préhension, le manipulateur ou le robot industriel comporte un système de préhension (10) selon l'une des revendications précédentes et un entraînement (2) de système de préhension.

15. Module (1) de système de préhension selon l'une des revendications précédentes, **caractérisé en ce que** :
• le module (1) de système de préhension comporte le système de préhension (10) selon l'une des revendications 11 à 13,
• l'entraînement (2) de système de préhension comporte au moins deux dispositifs mobiles l'un par rapport à l'autre, sur lesquels le système de préhension (10) est monté,
• les deux dispositifs mobiles l'un par rapport à l'autre sont mis au point de manière à pouvoir être rapprochés l'un de l'autre de manière linéaire ou pivotante dans le sens transversal et à pouvoir être éloignés l'un de l'autre dans l'entraînement (2) de système de préhension,
• un doigt de préhension individuel (11, 12) est monté respectivement contre/sur le dispositif mobile respectif de l'entraînement (2) de système de préhension par un élément de guidage (71, 72) concerné.
